(19) Europäisches Patentamt
European Patent Office
Office européen des brevets

(11) Publication number: **0 280 289 B1**

(12) **EUROPEAN PATENT SPECIFICATION**

(45) Date of publication of patent specification: **29.07.92**

(51) Int. Cl.5: **A01N 41/08**, A01N 25/22

(21) Application number: **88102784.1**

(22) Date of filing: **25.02.88**

(54) **Stabilized solid composition.**

(30) Priority: **27.02.87 JP 46491/87**

(43) Date of publication of application:
**31.08.88 Bulletin 88/35**

(45) Publication of the grant of the patent:
**29.07.92 Bulletin 92/31**

(84) Designated Contracting States:
**AT DE ES FR GB IT**

(56) References cited:
**GB-A- 1 264 207**

(73) Proprietor: **Takeda Chemical Industries, Ltd.**
**1-1, Doshomachi 4-chome**
**Chuo-ku, OSAKA(JP)**

(72) Inventor: **Tanabayashi, Chikara**
**A-301, 50 Yamadaminami**
**Suita Osaka 565(JP)**
Inventor: **Sawamura, Masatoshi**
**411, 1 Mizuo 2-chome**
**Ibaraki Osaka 567(JP)**
Inventor: **Gotou, Yukio**
**411, 1 Mizuo 2-chome**
**Ibaraki Osaka 567(JP)**

(74) Representative: **von Kreisler, Alek, Dipl.-Chem. et al**
**Patentanwälte Von Kreisler-Selting-Werner,**
**Deichmannhaus am Hauptbahnhof**
**W-5000 Köln 1(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

The present invention relates to a stabilized solid composition which comprises S,S'-[2-(dimethylamino)-trimethylene] bis-benzenethiosulfonate. More particularly, the present invention relates to a stabilized solid composition which comprises S,S'-[2-(dimethylamino)trimethylene] bis-benzenethiosulfonate and at least one oxide compound selected from the class consisting of titanium dioxide, calcium oxide, zinc oxide, magnesium oxide and boron oxide.

The composition of the present invention is used as an insecticide for agricultural use.

S,S'-[2-(dimethylamino)trimethylene] bis-benzenethiosulfonate[generic name: bensultap, tradename: Ruban; hereinafter referred to as bensultap] is represented by the formula:

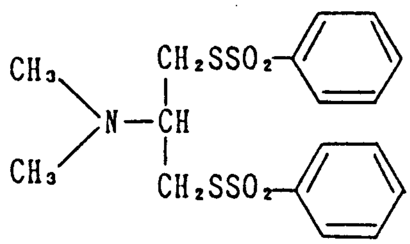

which is an insecticide for agricultural use. It shows excellent pest-controlling effects (for erxample, in British Patent No. 1264207 and Japanese Patent Publication No. 18847/70), which is of low toxicity to man, animals, fish and natural enemies to pests.

Hitherto, bensultap has been used in the form of conventional solid preparations, for example, dusts, granules or wettable powders as prepared by mixing with carriers or diluents such as mineral powders.

However, bensultap is unstable in those conventional solid preparations obtained by mixing bensultap with a carrier or diluent e.g. mineral powders according to the conventional methods. For example, when the solid preparations containing bensultap are stored at room temperature, bensultap gradually decomposes, deteriorates, changes the color and degrades. This leads to a decreased content of bensultap in the preparations.

Also, in mixed solid composition obtained by mixing bensultap with one or more agricultural chemicals for the purpose of producing broader and better effects as well as saving time and labor according to the conventional method, the effective ingredients, such as bensultap in some instances, decompose and degrade more rapidly than solid preparations containing bensultap alone as the effective ingredient.

The present inventors have unexpectedly found that among various metal oxides, titanium dioxide-($TiO_2$), calcium oxide(CaO), zinc oxide(ZnO), magnesium oxide (MgO) and boron oxide($B_2O_3$) specifically exert stabilizing effects on effective ingredients, particularly bensultap, in the solid composition, although other oxides e.g. aluminum oxide or silicon dioxide do not exert the stabilizing effect.

The present inventors have also unexpectedly found that the composition of the present invention can be used for the prevention of plant damage by pests without substantial phytotoxicity and in which the decomposition of bensultap is suppressed, i.e. bensultap is stabilized, for a prolonged period of storage. Furthermore, agricultural chemicals, e.g. ethofenprox, validamycin A, tricyclazole or phthalide which could not be combined with bensultap so far now can be incorporated into the composition. Besides, in the solid composition of the present invention the effective ingredients take durable effect after applying or spraying. The solid composition of the present invention can easily be produced on an industrial scale.

The stabilizing agents selected from titanium dioxide, calcium oxide, zinc oxide, magnesium oxide and boron oxide are used singly or as a mixture of the two or more species. Among them zinc oxide is preferred.

The stabilized solid composition of the present invention is substantially free from phytotoxicity and is not harmful to man and animals as well when and after applying or spraying, and can be used safely.

The solid composition of the present invention can be prepared by intermingling or compounding bensultap with at least one oxide compound selected from among titanium dioxide, calcium oxide, Zinc oxide, magnesium oxide and boron oxide, and, if necessary, an appropriate solid carrier or diluent, or adsorbing bensultap and said oxide compound with a solid carrier or diluent. The solid composition of the present invention is used in preparations, such as dusts, dusts driftless (hereinafter referred to as dusts DL), wettable powders, granules and micro-granules fine (hereinafter referred to as micro-granules F).

These preparations can be prepared according to the conventional method, for example, by mixing all ingredients.

The composition of the present invention may additionally include other effective ingredients and auxiliary components, such as dispersants, spreading agents, penetrants, wetting agents, thickening agents, caking inhibitors, coagulants, binders or antioxidants.

The content of bensultap in the solid composition of the present invention is suitably in the range of form about 0.1 to 90% by weight per weight of the whole composition. More concretely, the content of bensultap is preferably in the range of about 0.1 to 10 % by weight in case of dusts and dusts DL, about 1 to 10% by weight in case of granules and micro-granules F, and about 10 to 90% by weight in case of wettable powders.

In the composition of the present invention, the stabilizers, namely titanium dioxide, calcium oxide, zinc oxide, magnesium oxide and boron oxide may be used singly or as a mixture of two or more species in appropriate proportions. The stabilizers may be used in an amount (in the case that two or more species are used, the total amount) of from about 0.1 to 100 parts by weight, preferably about 0.5 to 50 parts by weight, per part by weight of bensultap.

Titanium dioxide, calcium oxide, zinc oxide, magnesium oxide and boron oxide are usually used in the form of powders, preferably having a particle size not more than about 100 $\mu$m.

Preferred examples of the solid carrier or diluent include mineral powders, such as clays (e.g. kaolin, bentonite, acid clay, finely divided clay or white carbon, talcs (e.g. pulverized talc or pulverized pyrophyllite) or silicas(e.g; diatomaceous earth or pulverized mica), plant or vegetable powders, such as soybean flour, tabacco powders, wheat flour or wood flour, calcium cabonate, sulfur powder and activated carbon. These may be used alone or as a mixture of two or more species.

Surfactants may be used as dispersants, spreading agents or penetrants. Examples of the surfactants include nonionic and anionic surfactants, such as soaps, polyoxyethylene alkyl aryl ethers (e.g. Neugen EA-142®, Daiichi Kogyo Seiyaku K.K.), polyoxyethylene alkyl aryl esters (e.g. Nonal® Toho Kagaku K.K.), alkyl sulfates (e.g. Emal 10® from Kao Soap K.K.), alkylsulfonates (e.g. Neogen® or Neogen T®, Daiichi Kogyo Seiyaku K.K.; Neopelex, Kao Soap K.K.), polyethylene glycol ethers (e.g. Nonipol 85®, Nonipol 100® or Nonipol 160®, Sanyo Chemical Industries K.K.) and polyhydric alcohol esters (e.g. Tween 20® or Tween 80®, Kao Soap K.K.).

Usable as caking inhibitors are, for example, white carbon, talc, diatomaceous earth and magnesium stearate. Usable as coagulants are, for example, liquid paraffin, ethylene glycol, diethylene glycol and triethylene glycol. Usable as binders are, for example, carboxymethylcellulose sodium salt, dextrin, $\alpha$-starch and polyvinyl alcohol.

Examples of the antioxidant include dibutylhydroxytolune, 4,4-thio-bis-6-tert-butyl-3-methylphenol, butylhydroxyanisol, poctylphenol, mono-(or di- or tri-) ($\alpha$-methylbenzyl)phenol, 2,6-di-tert-butyl-4-methylphenol and pentaerythrytyl-tetrakis[3-(3,5-di-tert-butyl-4-hydroxyphenyl)]propionate.

The composition of the present invention may include, in addition to bensultap, one or more of effective ingredients, for example, fungicides such as, organosulfur, organophosphorus, organoarsenic or organochlorine fungicides, insecticides such as organophosphorus, organochlorine, carbamate or pyrethroid insecticides, and various antibiotics.

Among these, preferred are the followings. The generic name or abbreviation is given in the parentheses following chemical name. The generic name or abbreviation may be used hereinafter in some instances.

Organosulfur fungicides

zinc ethylenebis (dithiocarbamate) (zineb), manganese ethylenebis (dithiocarbamate) (maneb)

Organophosphorus fungicides

S-benzyl diisopropyl phosphorothiolate (IBP), O-ethyl diphenyl phosphorodithiolate (EDDP)

Organoarsenic fungicides

ferric methanearsonate (MAF), ammonium salt of ferric methanearsonate (MAFA)

Organochlorine fungicides

pentachlorophenol (PCP), tetrachloroisophthalonitrile (TPN), 4,5,6,7-tetrachlorophthalide (phthalide)

Other fungicides

5-methyl-1,2,4-triazolo[3,4-b]benzothiazole (tricyclazole), 3-allyloxy-1,2-benzisothiazole 1,1-dioxide (probenazole)

Organophosphoric insecticides

dimethyl 4-nitro-m-tolyl phosphorothionate (MEP), S-1,2-bis(ethoxycarbonyl)ethyl dimethyl phosphorothiolothionate (malathon), p-cyanophenyl dimethyl phosphorothionate (CYAP), etc.;

Organochlorine insecticides

6,7,8,9,10,10-hexachloro-1,5,5a,6,9,9a-hexahydro-6,9-methano-2,4,3-benzodioxathiepine 3-oxide (benzoepin)

Carbamate insecticides
1-naphthyl methylcarbamate (NAC), m-tolyl N-methylcarbamate (MTMC), o-sec-butylphenyl N-methylcarbamate (BPMC), o-cumenyl N-methylcarbamate (MIPC), 3,4-xylyl N-methylcarbamate (MPMC), 3,5-xylyl N-methylcarbamate (XMC)
Pyrethroid insecticides
pyrethrins, allethrin, resmethrin
Antibiotics
blasticidin S, kasugamycin, polyoxin, oxytetracycline, validamycin A, etc.,
Other insecticides
S,S'-[2-(dimethylamino)trimethylenel bisthiocarbamate (cartap), 2-(4-ethoxyphenyl)-2-methyl-propyl 3-phenoxybenzyl ether (ethofenprox), (RS)-α-cyano-3-phenoxybenzyl (S)-2-(4-difluoromethoxyphenyl)-3-methylbutyrate (flucythrinate).

More preferable effective ingredients are validamycin A, probenazole, IBP, tricyclazole, ethofenprox, flucythrinate, NAC, phthalide, MPMC, MTMC, BPMC and MIPC. Most preferable ones are validamycin A, tricyclazole, ethofenprox and phthalide.

Concrete examples of the mixed composition of the present invention include a mixture of bensultap and ethofenprox, and a mixture of bensultap, ethofenprox and tricyclazole (or phthalide or valicamycin A).

Other effective ingredients than bensultap in the solid composition of the present invention may be used in an amount of about 0.01 to 20% by weight, preferably about 0.05 to 10% by weight, per weight of the whole composition in the case that one species is used, and about 0.01 to 20% by weight, perferably about 0.05 to 15% by weight, on the sum total basis per weight of the whole composition in the case that two or more species are used.

In the case that the effective ingredient (e.g. ethofenprox) is liquid or melts at the neighbourhood of room temperature, the effective ingredient may be employed as a slolution or dispersion thereof in a solvent showing high-boiling point, such as phenylxylylethane, di-2-ethylhexyladipate or 2-ethylhexyldiphenylphosphate.

The composition of the present invention may additionally contain miticides, nematocides, herbicides, plant hormones, plant growth regulators, synergists, attractants, repellents, colorants or fertilizers.

In the composition of the present invention, the wettable powders are diluted with water prior to use, to an appropriate extent, about 30 to 4,000 fold, preferably about 300 to 3,000 fold, and then applied. The wettable powders are preferably used after dilution to a bensultap concentration of about 50 to 1,000 ppm.

In the case that the composition of the present invetion is used as an insecticide for agricultural use, bensultap in the composition is preferably used in an amount of about 30 g to about 500 g per 10 ares. The composition of the present invention is directly sprayed onto stems and leaves or applied to plant roots. Thus, treatment can be made by per se known methods. When timely sprayed onto or applied to rice, vegetables (e.g. cabbage, Chinese cabbage, Japanese radish, cucumber or potato), fruit trees (e.g. mandarin orange or pear), tea and tobacco, the composition of the present invention can control or eradicate various pests thereon, for example lepidopterous pests, such as rice stem borer, grass leaf roller, riceplant skipper, European corn borer, armyworm, cabbage butterfly, diamondback moth, cabbage armyworm, been worm, cabbage webworm, crucifer caterpillar, oriental tobacco budworm or tea leaf roller, coleopterous pests, such as rice leaf beetle or melon beetle, hemipterous pests, such as green rice leafhopper or smaller green leafhopper, thysanopterous pests, such as yellow tea thrips, dipterous pests, such as rice leaf miner. Furthermore, it is feasible to prevent the breeding of various pests for a prolonged period by spraying or applying the composition of the present invention in advance.

The composition of the present invention can be prepared by per se known methods, as shown hereinabove and, more in detail following Examples.

The Reference Examples, Examples and Test Examples given hereinbelow illustrate the invention in further detail. In the Examples, "part(s)" means "part(s) by weight".

Reference Example 1 Dusts DL

To 96.5 parts of finely divided clay, are added 2.2 parts of bensultap, 1.0 part of white carbon and 0.3 part of liquid paraffin (Doriless C®; hereinafter referred to as Doriless C), followed by thorough blending in a mixer grinder. The resultant mixture is further processed in a flash mixer to give a bensultap dusts DL.

13.1% Decomposition of bensultap after storage at 60 ° C for 1 week.

Reference Example 2 Dusts DL

To 94.1 parts of finely divided clay, are added 2.2 parts of bensultap, 1.2 parts of a 50% by weight solution of ethofenprox in phenylxylylethane (hereinafter referred to as solvent), 2.2 parts of white carbon and 0.3 part of Doriless C, followed by thorough blending in a mixer grinder. The resultant mixture is further processed in a flash mixer to give dusts DL of bensultap-ethofenprox.

Reference Example 3 Dusts DL

To 95.4 parts of finely divided clay, are added 2.2 parts of bensultap, 1.1 parts of tricyclazole, 1.0 part of white carbon and 0.3 part of Doriless C, followed by thorough blending in a mixer grinder. The resultant mixture is further processed in a flash mixer to give dusts DL of bensultap-tricyclazole.

24.6% Decomposition of bensultap after storage at 60 ° C for 1 week.

Reference Example 4 Dusts DL

To 93.0 parts of finely divided clay, are added 2.2 parts of bensultap, 1.1 parts of tricyclazole, 1.2 parts of a 50% by weight solution of ethofenprox in the solvent, 2.2 parts of white carbon and 0.3 part of Doriless C, followed by thorough blending in a mixer grinder. The resultant mixture is further processed in a flash mixer to give dusts DL of bensultap-tricyclazole-ethofenprox.

Reference Example 5 Dusts DL

To 93.8 parts of finely divided clay, are added 2.2 parts of bensultap, 1.2 parts of a 50% by weight solution of ethofenprox in the solvent, 0.3 part of validamycin A, 2.2 parts of white carbon and 0.3 part of Doriless C, followed by thorough blending in a mixer grinder., The resultant mixture is further processed in a flash mixer to give dusts DL of bensultap-ethofenprox-validamycin.

Reference Example 6 Granules

A mixture weighing 100 parts is prepared by blending 4 parts of bensultap, 6 parts of dextrin, 2 parts of Nonipol 85® (Sanyo Chemical Industries K.K.) (hereinafter referred to as surfactant) and clay (the balance). After thorough blending of the mixture, water is added, to the mixture, followed by kneading. The kneaded mixture granulated by means of an extruder granulator (screen mesh diameter: 1.0 mm). The wet granules obtained are dried and sifted to give a mass of granules 10 to 32 mesh in size.

Reference Example 7 Wettable powders

To 69.5 parts of clay for wettable powders are added 10.5 parts of bensultap, 11.0 parts of a 50% by weight solution of ethofenprox in the solvent, 5.0 parts of white carbon and 4.0 parts of the surfactant, followed by thorough blending in a mixer grinder. The resultant mixture is then comminuted in a micropulverizer to give wettable powders of bensultap-ethofenprox.

Reference Example 8 Dusts DL

To 78.0 parts of finely divided clay, are added 2.2 parts of bensultap, 1.1 parts of tricyclazole, 1.2 parts of a 50% by weight solution of ethofenprox in the solvent, 2.2 parts of white carbon, 0.3 part of Doriless C and 15.0 parts of an aluminum oxide powder, followed by thorough blending in a mixer grinder. The resultant mixture is then processed in a flash mixer to give dusts DL of bensultap-tricyclazole-ethofenprox.

Reference Example 9 Dusts DL

To 91.4 parts of finely divided clay, are added 2.2 parts of bensultap, 1.2 parts of a solution containing 50% by weight concentration of ethofenprox and 5% by weight concentration of pentaerythrytyl-tetrakis [3-(3,5-di-tert-butyl-4-hydroxyphenyl)]propionate in the solvent, 2.2 parts of white carbon and 0.3 part of Doriless C, followed by thorough blending in a mixer grinder. The resultant mixture is then processed in a flash mixer to give dusts DL of bensultap-ethofenprox-phthalide.

Reference Example 10 Dusts DL

To 78.0 parts of finely divided clay, are added 2.2 parts of bensultap, 1.1 parts of tricyclazole, 1.2 parts of a solution containing 50% by weight concentration of ethofenprox and 5% by weight concentration of pentaerythrytyl-tetrakis[3-(3,5-di-tert-butyl-4-hydroxyphenyl)]propionate in the solvent, 2.2 parts of white carbon, 0.3 part of Doriless C and 15.0 parts of silicon oxide powder followed by thorough blending in a mixer grinder. The resultant mixture is then processed in a flash mixer to give dusts DL of bensultap-tricyclazole-ethofenprox

Example 1 Dusts DL

To 78.0 parts of finely divided clay, are added 2.2 parts of bensultap, 1.1 parts of tricyclazole, 1.2 parts of a 50% by weight solution of ethofenprox in the solvent, 2.2 parts of white carbon, 0.3 part of Doriless C and 15.0 parts of magnesium oxide powder (particle size: not more than 45 µm), followed by thorough blending in a mixer grinder. The resultant mixture is then processed in a flash mixer to give dusts DL of bensultap-tricyclazole-ethofenprox.

Example 2 Dusts DL

To 78.0 parts of finely divided clay, are added 2.2 parts of bensultap, 1.1 parts of tricyclazole, 1.2 parts of a 50% by weight solution of ethofenprox in the solvent, 2.2 parts of white carbon, 0.3 part of Doriless C and 15.0 parts of a boron oxide powder (particle size: not more than 45 µm), followed by thorough blending in a mixer grinder. The resultant mixture is then processed in a flash mixer to give dusts DL of bensultap-tricyclazole-ethofenprox.

Example 3 Dusts DL

To 78.0 parts of finely divided clay, are added 2.2 parts of bensultap, 1.1 parts of tricyclazole, 1.2 parts of a 50% by weight solution of ethofenprox in the solvent, 2.2 parts of white carbon, 0.3 parts of Doriless C and 15.0 parts of a zinc oxide powder (particle size: not more than 45 µm), followed by thorough blending in a mixer grinder. The resultant mixture is processed in a flash mixer to give dusts DL of bensultap-tricyclazole-ethofenprox.

Example 4 Dusts DL

To 78.0 parts of finely divided clay, are added 2.2 parts of bensultap, 1.1 parts of tricyclazole, 1.2 parts of a 50% by weight solution of ethofenprox in the solvent, 2.2 parts of white carbon, 0.3 part of Doriless C and 15.0 parts of a calcium oxide powder (particle size: not more than 45 µm), followed by thorough blending in a mixer grinder. The resultant mixture is further processed in a flash mixer to give dusts DL of a bensultap-tricyclazole-ethofenprox.

Example 5 Dusts DL

To 83.0 parts of finely divided clay, are added 2.2 parts of bensultap, 1.1 parts of tricyclazole, 1.2 parts of a 50% by weight solution of ethofenprox in the solvent, 2.2 parts of white carbon, 0.3 part of Doriless C and 10.0 parts of a calcium oxide powder (particle size: not more than 45 µm), followed by thorough blending in a mixer grinder. The resultant mixture is then processed in a flash mixer to give dusts DL of bensultap-tricyclazole-ethofenprox.

Example 6 Dusts DL

To 88.0 parts of finely divided clay, are added 2.2 parts of bensultap, 1.1 parts of tricyclazole, 1.2 parts of a 50% by weight solution of ethofenprox in the solvent, 2.2 parts of white carbon, 0.3 part of Doriless C and 5.0 parts of a calcium oxide powder (particle size: not more than 45 µm), followed by thorough blending in a mixer grinder. The resultant mixture is then processed in a flash mixer to give dusts DL of bensultap-tricyclazole-ethofenprox.

Example 7 Dusts DL

To 90.8 parts of finely divided clay, are added 2.2 parts of bensultap, 1.1 parts of tricyclazole, 1.2 parts

of a 50% by weight solution of ethofenprox in the solvent, 2.2 parts of white carbon, 0.3 parts of Doriless C and 2.2 parts of a calcium oxide powder (particle size: not more than 45 μm), followed by thorough blending in a mixer grinder. The resultant mixture is then processed in a flash mixer to give a dusts DL of bensultap-tricyclazole-ethofenprox.

Example 8 Dusts DL

To 84.1 parts of finely divided clay, are added 2.2 parts of bensultap, 1.2 parts of a 50% (by weight solution of ethofenprox in the solvent, 2.2 parts of white carbon, 0.3 part of Doriless D and 10.0 parts of a zinc oxide powder (particle size: not more than 45 μm), followed by thorough blending in a mixer grinder. The resultant mixture is then processed in a flash mixer to give dusts DL of bensultap-ethofenprox.

Example 9 Dusts DL

To 83.8 parts of finely divided clay, are added 2.2 parts of bensultap, 1.2 parts of a 50% by weight solution of ethofenprox in the solvent, 0.3 part of validamycin A, 2.2 parts of white carbon, 0.3 part of Doriless C and 10.0 parts of a magnesium oxide powder (particle size: not more than 45 μm), followed by thorough blending in a mixer grinder. The resultant mixture is then processed in a flash mixer to give dusts DL of bensultap-ethofenprox-validamycin A.

Example 10 Granules

A mixture weighing 100 parts is prepared by blending 4 parts of bensultap, 6 parts of dextrin, 2 parts of the surfactant, 25 parts of a titanium dioxide powder (particle size: not more than 45 μm) and clay (the balance). After thorough mixing, 12 parts of water is added to the mixture, followed by kneading. The kneaded mixture is granulated on an extruder granulator (screen mesh size: 1.0 mm in diameter). The wet granulation product thus obtained is dried and sifted to give a mass of granules 10 to 32 mesh in size.

Example 11 Granules

A mixture weighing 100 parts is prepared by blending 4 parts of bensultap, 6 parts of dextrin, 2 parts of the surfactant, 25 parts of a zinc oxide powder (particle size: not more than 45 μm) and clay (the balance). After thorough mixing, 12 parts of water is added to the mixture, followed by kneading. The kneaded mixture is granulated on an extruder granulator (screen mesh size: 1.0 mm in diameter). The wet granulation product thus obtained is dried and sifted to give a mass of granules 10 to 32 mesh in size.

Example 12 Wettable powders

To 54.5 parts of clay for wettable powders, are added 10.5 parts of bensultap, 11.0 parts of a 50% by weight solution of ethofenprox in the solvent, 5.0 parts of white carbon, 4.0 parts of the surfactant, 15.0 parts of a zinc oxide powder (particle size: not more than 45 μm), followed by thorough blending in a mixer grinder. The resultant mixture is further comminuted in a micropulverizer to give wettable powders of bensultap-ethofenprox.

Example 13 Dusts DL

To 81.4 parts of finely divided clay, are added 2.2 parts of bensultap, 1.2 parts of a solution containing 50% by weight concentration of ethofenprox and 5% by weight concentration of pentaerythrytyl-tetrakis [3-(3,5-di-tert-butyl-4-hydroxyphenyl)]propionate in the solvent, 2.7 parts of phthalide, 2.2 parts of white carbon, 0.3 part of Doriless C and 10.0 parts of a zinc oxide powder (particle size: not more than 45 μm), followed by thorough blending in a mixer grinder. The resultant mixture is then processed in a flash mixer to give dusts DL of bensultap-ethofenprox-phthalide.

Example 14 Dusts DL

To 83.8 parts of finely divided clay, are added 2.2 parts of bensultap, 1.2 parts of a solution containing 50% by weight concentration of ethofenprox and 5% by weight concentration of pentaerythrytyl-tetrakis [3-(3,5-di-tert-butyl-4-hydroxyphenyl))propionate in the solvent, 0.3 part of validamycin A, 2.2 parts of white

carbon, 0.3 part of Doriless C and 10.0 parts of a zinc oxide powder (particle size: not more than 45 μm), followed by thorough blending in a mixer grinder. The resultant mixture is then processed in a flash mixer to give dusts DL of bensultap-ethofenprox-validamycin A.

Example 15 Dusts DL

To 84.1 parts of finely divided clay, are added 2.2 parts of bensultap, 1.2 parts of a solution containing 50% by weight concentration of ethofenprox and 5% by weight concentration of pentaerythrytyl-tetrakis [3-(3,5-di-tert-butyl-4-hydroxyphenyl)]propionate in the solvent, 2.2 parts of white carbon, 0.3 part of Doriless C and 10.0 parts of a zinc oxide powder (particle size: not more than 45 μm), followed by thorough blending in a mixer grinder. The resultant mixture is then processed in a flash mixer to give dusts DL of bensultap-ethofenprox.

Example 16 Dusts DL

To 83.0 parts of finely divided clay, are added 2.2 parts of bensultap, 1.1 parts of tricyclazole, 1.2 parts of a solution containing 50% by weight concentration of ethofenprox and 5% by weight concentration of pentaerythrytyl-tetrakis[3-(3,5-ditert-butyl-4-hydroxyphenyl)]propionate in the solvent, 2.7 parts of phthalide, 2.2 parts of white carbon, 0.3 part of Doriless C and 10.0 parts of a zinc oxide powder (particle size: not more than 45 μm), followed by thorough blending in a mixer grinder. The resultant mixture is then processed in a flash mixer to give dusts DL of bensultap-tricyclazole-ethofenprox.

Test Example

The mixed preparations (20 g each) obtained in Examples 1 to 16 and Reference Examples 1 to 10 are placed in sample bottles and the bottles are closely stoppered and stored at a predetermined temperature for a predetermined period. Then, each sample is taken out, a certain quantity (100 mg as bensultap) is accurately weighed and extracted with 25 ml of acetonitrile with shaking for 20 minutes. The content of bensultap in the extract is determined by high-performance liquid chromatography [column: Nucleosil 10-$C_{18}$, obtained from GasChro kogyo; extractant solvent: acetonitrile-water (60:40 v/v)]. The percent decomposition of bensultap is calculated as follows:

$$\left(1 - \frac{\text{Content of bensultap in preparation after storage at determined temperature for determined period}}{\text{Content of bensultap in preparation immediately after production}}\right) \times 100$$

The test results obtained are shown in Tables 1-6.

Table 1 Stability of dusts DL of bensultap-ethofenprox

| Test composition | stabilizer | % Decomposition of bensultap after 40°C/1 month |
|---|---|---|
| Example 8 | Zinc oxide | 2.7 |
| Example 15 | " | 2.3 |
| Control | | |
| Reference Example 2 | None | 20.2 |

Table 2 Stability of dusts DL of bensultap-ethofenprox-validamycin

| Test Composition | Stabilizer | % Decomposition of bensultap after 40°C/1 month |
|---|---|---|
| Example 9 | Magnesium oxide | 5.2 |
| Example 14 | Zinc oxide | 1.6 |
| Control | | |
| Reference Example 5 | None | 21.8 |

Table 3 Stability of dusts DL of bensultap-tricyclazole-ethofenprox

| Test composition | Stabilizer | % Decomposition of bensultap after 40°C/1 month |
|---|---|---|
| Example 1 | Magnesium oxide | 4.2 |
| Example 2 | Boron oxide | 0 |
| Example 3 | Zinc Oxide | 0 |
| Example 4 | Calcium oxide | 3.7 |
| Example 5 | Calcium oxide | 3.1 |
| Example 6 | Calcium oxide | 4.4 |
| Example 7 | Calcium oxide | 7.2 |
| Example 16 | Zinc oxide | 1.2 |
| Control | | |
| Reference Example 4 | None | 36.7 |
| Reference Example 8 | Aluminum oxide | 31.7 |
| Reference Example 10 | Silicon dioxide | 32.5 |

Table 4 Stability of bensultap granules

| Test composition | Stabilizer | % Decomposition of bensultap | |
|---|---|---|---|
| | | 40°C/1 month | 60°C/2 weeks |
| Example 10 | Titanium oxide | 0 | 16.5 |
| Example 11 | Zinc oxide | 0.9 | Not measured |
| Control | | | |
| Reference Example 6 | None | 6.6 | 75.1 |

Table 5 Stability of wettable powders of bensultap-ethofenprox

| Test composition | Stabilizer | % Decomposition of bensultap | |
|---|---|---|---|
| | | 40°C/1 month | 60°C/2 weeks |
| Example 12 | Zinc oxide | 2.1 | 13.7 |
| Control Reference Example 7 | None | 11.0 | 33.9 |

Table 6 Stability of dusts DL of bensultap-ethofenprox-phthalide

| Test composition | stabilizer | % Decomosition of bensultap after 40°C/1 month |
|---|---|---|
| Example 13 | Zinc oxide | 0.8 |
| Control Reference Example 9 | None | 25.3 |

The above results clearly indicate that bensultap can be markedly stabilized by mixing the solid composition containing bensultap with titanium dioxide, calcium oxide, zinc oxide, magnesium oxide or boron oxide.

**Claims**

**Claims for the following Contracting States : AT, DE, FR, GB, IT**

1. A stabilized solid composition, which comprises S,S'-[2-(dimethylamino)trimethylene] bis-benzenethiosulfonate and at least one oxide compound selected from the class consisting of titanium dioxide, calcium oxide, zinc oxide, magnesium oxide and boron oxide.

2. The composition as claimed in claim 1, wherein the oxide compound is zinc oxide.

3. The composition as claimed in claim 1, wherein the amount of the oxide compound or compounds is in the range of from 0.1 to 100 parts by weight per one part by weight of S,S'-[2-(dimethylamino)-trimethylene] bis-benzenethiosulfonate.

4. The composition as claimed in claim 1, wherein the composition further comprises 2-(4-ethoxyphenyl)-2-methylpropyl 3-phenoxybenzyl ether, 5-methyl-1,2,4-triazolo[3,4-b]benzothiazole, 4,5,6,7-tetrachlorophthalide and/or validamycin A,

**5.** A process for producing the composition as claimed in claim 1, which comprises intermingling or compounding S,S'-[2-(dimethylamino)trimethylene] bis-benzenethiosulfonate with at least one oxide compound selected from the class consisting of titanium dioxide, calcium oxide, zinc oxide, magnesium oxide and boron oxide.

**Claims for the following Contracting State : ES**

**1.** A process for producing a stabilized solid composition, which comprises S,S'-[2(dimethylamino)-trimethylene] bis-benzenethiosulfonate and at least one oxide compound selected from the class consisting of titanium dioxide, calcium oxide, zinc oxide, magnesium oxide and boron oxide, which comprises intermingling or compounding S,S'-[2-(di-methylamino)trimethylene] bis-benzenethiosulfonate with at least one oxide compound selected from the class consisting of titanium dioxide, calcium oxide, zinc oxide, magnesium oxide and boron oxide.

**2.** The process as claimed in claim 1, wherein the oxide compound is zinc oxide.

**3.** The process as claimed in claim 1, wherein the amount of the oxide compound or compounds is in the range of from 0.1 to 100 parts by weight per one part by weight of S,S'-[2-(dimethylamino)-trimethylene] bis-benzenethiosulfonate.

**4.** The process as claimed in claim 1, wherein the composition further comprises 2-(4-ethoxyphenyl)-2-methylpropyl 3-phenoxybenzyl ether, 5-methyl-1,2,4-triazolo[3,4-b]benzothiazole, 4,5,6,7-tetrachlorophthalide and/or validamycin A.

**Revendications**
**Revendications pour les Etats contractants suivants : AT, DE, FR, GB, IT**

**1.** Composition solide stabilisée, qui comprend du S,S'-[2-(diméthylamino)triméthylène]-bis-benzènethiosulfonate et au moins un oxyde choisi dans le groupe constitué par le dioxyde de titane, l'oxyde de calcium, l'oxyde de zinc, l'oxyde de magnésium et l'oxyde de bore.

**2.** Composition conforme à la revendication 1, dans laquelle l'oxyde est de l'oxyde de zinc.

**3.** Composition conforme à la revendication 1, dans laquelle la proportion d'oxyde ou d'oxydes se situe dans l'intervalle allant de 0,1 à 100 parties en poids pour une partie en poids de S,S'-[2-(diméthylamino)triméthylène]-bis-benzènethio-sulfonate.

**4.** Composition conforme à la revendication 1, laquelle composition comprend en outre de l'éther de 2-(4-éthoxyphényl)-2-méthylpropyle et de 3-phénoxybenzyle, du 5-méthyl-1,2,4-triazolo[3,4-b]benzothiazole, du 4,5,6,7-tétrachlorophtalide et/ou de la validamycine A.

**5.** Procédé de production d'une composition conforme à la revendication 1, qui comprend le fait de mélanger ou d'entremêler du S,S'-[2-(diméthylamino)triméthylène]-bis-benzènethio-sulfonate avec au moins un oxyde choisi dans le groupe constitué par le dioxyde de titane, l'oxyde de calcium, l'oxyde de zinc, l'oxyde de magnésium et l'oxyde de bore.

**Revendications pour l'Etat contractant suivant : ES**

**1.** Procédé de production d'une composition solide stabilisée, comprenant du S,S'-[2-(diméthylamino)-triméthylène]-bis-benzènethio-sulfonate et au moins un oxyde choisi dans le groupe constitué par le dioxyde de titane, l'oxyde de calcium, l'oxyde de zinc, l'oxyde de magnésium et l'oxyde de bore, lequel procédé comprend le fait de mélanger ou d'entremêler du S,S'-[2-(diméthylamino)triméthylène]-bis-benzènethio-sulfonate avec au moins un oxyde choisi dans le groupe constitué par le dioxyde de titane, l'oxyde de calcium, l'oxyde de zinc, l'oxyde de magnésium et l'oxyde de bore.

**2.** Procédé conforme à la revendication 1, dans lequel l'oxyde est de l'oxyde de zinc.

**3.** Procédé conforme à la revendication 1, dans lequel la quantité d'oxyde ou d'oxydes se situe dans

l'intervalle allant de 0,1 à 100 parties en poids pour une partie en poids de S,S'-[2-(diméthylamino)-triméthylène]-bis-benzènethio-sulfonate.

4. Procédé conforme à la revendication 1, dans lequel la composition comprend en outre de l'éther de 2-(4-éthoxyphényl)-2-méthylpropyle et de 3-phénoxybenzyle, du 5-méthyl-1,2,4-triazolo[3,4-b]-benzothiazole, du 4,5,6,7-tétrachlorophtalide et/ou de validamycine A.

**Patentansprüche**

**Patentansprüche für folgende Vertragsstaaten : AT, DE, FR, GB, IT**

1. Stabilisierte feste Zusammensetzung, umfassend S,S'-[2-(Dimethylamino)trimethylen]-bis-benzolthiosulfonat und wenigstens eine Oxid-Verbindung, die aus der aus Titandioxid, Calciumoxid, Zinkoxid, Magnesiumoxid und Boroxid bestehenden Klasse ausgewählt ist.

2. Zusammensetzung nach Anspruch 1, worin die Oxid-Verbindung Zinkoxid ist.

3. Zusammensetzung nach Anspruch 1, worin die Menge der Oxid-Verbindung oder -Verbindungen im Bereich von 0,1 bis 100 Gew.-Teilen auf 1 Gew.-Teil S,S'-[2-(Dimethyl-amino)trimethylen]-bis-benzolthiosulfonat liegt.

4. Zusammensetzung nach Anspruch 1, worin die Zusammensetzung weiterhin 2-(4-Ethoxyphenyl)-2-methylpropyl-3-phenoxybenzylether, 5-Methyl-1,2,4-triazolo[3,4-b]benzothiazol, 4,5,6,7-Tetrachlorphthalid und/oder Validamycin A umfaßt.

5. Verfahren zur Herstellung der in Anspruch 1 beanspruchten Zusammensetzung, umfassend das Vermischen oder Kompoundieren von S,S'-[2-(Dimethylamino)trimethylen]-bis-benzolthiosulfonat mit wenigstens einer Oxid-Verbindung, die aus der aus Titandioxid, Calciumoxid, Zinkoxid, Magnesiumoxid und Boroxid bestehenden Klasse ausgewählt ist.

**Patentansprüche für folgende Vertragsstaat : ES**

1. Verfahren zur Herstellung einer stabilisierten festen Zusammensetzung, die S,S'-[2-(Dimethylamino)-trimethylen]-bis-benzolthiosulfonat und wenigstens eine Oxid-Verbindung umfaßt, die aus der aus Titandioxid, Calciumoxid, Zinkoxid, Magnesiumoxid und Boroxid bestehenden Klasse ausgewählt ist, umfassend das Vermischen oder Kompoundieren von S,S'-[2-(Dimethylamino)-trimethylen]-bis-benzolthiosulfonat mit wenigstens einer Oxid-Verbindung, die aus der aus Titandioxid, Calciumoxid, Zinkoxid, Magnesiumoxid und Boroxid bestehenden Klasse ausgewählt ist.

2. Verfahren nach Anspruch 1, worin die Oxid-Verbindung Zinkoxid ist.

3. Verfahren nach Anspruch 1, worin die Menge der Oxid-Verbindung oder -Verbindungen im Bereich von 0,1 bis 100 Gew.-Teilen auf 1 Gew.-Teil S,S'-[2-(Dimethylamino)-trimethylen]-bis-benzolthiosulfonat liegt.

4. Verfahren nach Anspruch 1, worin die Zusammensetzung weiterhin 2-(4-Ethoxyphenyl)-2-methylpropyl-3-phenoxy-benzylether, 5-Methyl-1,2,4-triazolo[3,4-b]benzothiazol, 4,5,6,7-Tetrachlorphthalid und/oder Validamycin A umfaßt.